# EUROPÄISCHE PATENTSCHRIFT

(11) **EP 1 919 816 B1**
(45) Veröffentlichungstag und Bekanntmachung des Hinweises auf die Patenterteilung: **10.08.2011**
(21) Anmeldenummer: 06774745.1
(22) Anmeldetag: 17.08.2006
(51) Int. Cl.: B66C 21/00

(54) **LAUFWAGEN FÜR SEILKRAN**
BOGIE FOR SKYLINE CRANE
CHARIOT DESTINE A UNE GRUE A CABLE

(30) Priorität: 18.08.2005 AT 56605 U
(43) Veröffentlichungstag der Anmeldung: 14.05.2008
(73) Patentinhaber: SEIK G.m.b.H./Srl, 39040 Truden (BZ) (IT)
(72) Erfinder: LADSTÄTTER, Hannes, A-9963 St. Jakob i. Def. (AT)
(74) Vertreter: Oberosler, Ludwig
(86) Internationale Anmeldenummer: PCT/AT2006/000344
(87) Internationale Veröffentlichungsnummer: WO 2007/019597

(56) Entgegenhaltungen:
- EP-A1- 0 274 555
- DE-B- 1 059 641
- DE-C1- 4 020 843

## Beschreibung

Die Erfindung betrifft einen Laufwagen für Seilkran mit wenigstens zwei Hubwinden und einer Antriebseinheit für die Hubwinden, wobei die Antriebseinheit einen Verbrennungsmotor, einen Hydraulikkreislauf und einen Hydromotor umfassen.

Gattungsgemäße Laufwägen werden zur forstlichen Holzbringung mittels Seilkrananlagen eingesetzt. Bei bekannten Laufwägen bzw. Anlagen fährt der Laufwagen im Gravitationsbetrieb am Tragseil und wird mittels eines Zugseils an einer Winde verfahren. Weiters ist bekannt, den Laufwagen an einem Tragseil zu führen und von zwei in Gegenrichtung am Laufwagen fixierten Zugseilen mittels zwei Winden zu verfahren. Neuere Anlagen und Laufwagen bedienen sich so genannter selbstfahrender Laufwägen, die einen eigenen Antrieb für den Laufwagen aufweisen. Solche Laufwägen fahren am Tragseil oder an einem zusätzlich gespannten Zugseil. In der DE 1 059 641 wird eine Vorrichtung zum Betrieb von Laufwägen gezeigt, bei der der Laufwagen selbst keinen eigenen Antrieb aufweist und entlang von Zugseilen von einem bodengebundenen Motor bewegt wird. In dieser Schrift wird auch der freischwebende Transport von Gütern, insbesondere Baumstämmen, gezeigt. Das heißt, während bei den meisten Transportverfahren der Baumstamm hängend transportiert wird, wird hier erstmals der Transport eines Baumstammes entlang von zwei Laufwägen gezeigt, wodurch sich eine "freischwebende" Hängung ergibt. Einen verbesserten Laufwagen zum frei schwebenden Transport von Baumstämmen zeigt die EP 274 555, bei der ein Laufwagen der eingangs beschriebenen Art gezeigt wird. Während bei den meisten bekannten Verfahren die Bäume an einem Lastgehänge befestigt werden und dadurch bei geringer Tragseilhöhe ein schleifender Transport erfolgt, wird hier der Transport eines Holzstammes an zwei Hubwinden gezeigt. Am Laufwagen ist ein einzelner Verbrennungsmotor angebracht, der wiederum einen Hydromotor (bzw. Hydraulikmotor oder Ölmotor) antreibt über eine Hydraulikanlage, wobei über den Hydromotor und ein Getriebe die Hubwinden steuerbar sind.

Nachteilig am Stand der Technik ist, dass die Hubwinden nur einzeln bewegbar sind und der Laufwagen nicht verfahrbar ist, während die Hubwinden betätigt werden.

Aufgabe der vorliegenden Erfindung ist es daher, die Nachteile des Standes der Technik zu verbessern.

Erfindungsgemäß wird dies gelöst, indem für jede Hubwinde ein Hydromotor vorgesehen ist.

Beim Stand der Technik werden die Hubwinden mit nur einem Hydromotor betrieben, daher muss zum Betreiben der anderen Hubwinde oder des Fahrantriebes des Laufwagens das Getriebe des Hydromotors umgeschaltet werden. Dadurch ist immer nur eine Höhenveränderung der Lastgehänge an den Hubwinden auf einer Seite möglich. Durch das Einbringen eines zweiten Hydromotors können zwei Lastgehänge gleichzeitig, aber auch einzeln in der Höhe reguliert werden.

Dabei hat es sich als vorteilhaft erwiesen, wenn jeder Hydromotor einen eigenen Hydraulikkreislauf aufweist.

Um den Laufwagen möglichst klein zu halten und um Gewicht zu reduzieren, hat es sich als vorteilhaft erwiesen, wenn die Hydraulikkreisläufe einen gemeinsamen Versorgungskreislauf aufweisen.

Am günstigsten wird bei einem gemeinsamen Versorgungskreislauf die Verbindung zu den einzelnen Hydraulikkreisläufen durch Durchflussmengenregulierungsventile erzielt. Daher ist in einer bevorzugten Ausführungsvariante vorgesehen, dass der Versorgungskreislauf und die Hydraulikkreisläufe über Durchflussmengenregulierungsventile in Verbindung stehen. Durch ein Durchflussmengenregulierungsventil zwischen Versorgungskreislauf und Hydraulikkreislauf kann auch bei unterschiedlicher Belastung an den beiden Hydromotoren trotzdem eine individuelle Steuerung der Hydromotoren erfolgen. Dies ist auch bei entsprechender Dimensionierung des Durchflussmengenregulierungsventils bei Drücken bis zu 400 bar möglich. Insgesamt sind dabei zwei Ventilblöcke vorgesehen mit einem Vorlauf, in denen der Druck zum jeweiligen Hydromotor erzeugt wird und einem Rücklauf ebenfalls über Durchflussmengenregulierungsventile zurück in den Hydraulikmittelversorgungskreislauf. Dies ermöglicht es, dass die Hubwinden gleichzeitig betreibbar sind.

In einem weiteren Ausführungsbeispiel ist vorgesehen, dass der Laufwagen und die Hubwinden gleichzeitig betreibbar sind. Ein eigener Antrieb des Laufwagens ermöglicht es, den Laufwagen als so genannten Selbstfahrer zu betreiben. Es wäre allerdings auch denkbar, eine Hubwinde anstelle zum Transport des Ladegutes als auch Antrieb zu verwenden. Dazu wird die Hubwinde an einem ortsfesten Punkt fixiert und der Laufwagen über einen Hydromotor betrieben.

In einem bevorzugten Ausführungsbeispiel ist vorgesehen, dass der Laufwagen und die Hubwinden gleichzeitig betreibbar sind. Dies lässt sich beispielsweise durch das eben beschriebene Umfunktionieren der Hubwinde realisieren. Außerdem ist es denkbar, durch einen gesonderten Antrieb von Laufwagen und Hubwinden eine gleichzeitige Bewegung von Hubwinden und Laufwagen zu realisieren.

Zur vereinfachten Steuerung des Laufwagens ist vorgesehen, dass der Laufwagen fernsteuerbar ist. Bevorzugt ist dabei vorgesehen, dass die Fernsteuerung eine Funkfernsteuerung ist. Alternativ könnte allerdings auch vorgesehen sein, dass die Fernsteuerung auch für eine Schlittenwinde anwendbar ist. Eine dritte Variante der Fernsteuerung wäre, wenn die Fernsteuerung für ein Kippmastseilgerät anwendbar ist. Dadurch ist die Steuerung des Verfahrens des Laufwagens am Tragseil und der Betätigung der Hubwinden von einer einzigen Steuereinheit bzw. einem Sender möglich.

In einem weiteren vorteilhaften Ausführungsbeispiel ist vorgesehen, wenn die Hubwinden distanzveränderbar sind. Dabei wäre vorgesehen, dass zwischen die Hubwinden zusätzliche Hydraulikverbindungsschläuche eingebracht werden, die zwischen die Hubwinden einsetzbar sind. Im Umlaufbetrieb (zwei in Gegenrichtung am Laufwagen fixierte Zugseile) ist es möglich, zwischen den Hubwinden eine Seilverbindung einzubringen. Im Gravitationsbetrieb ist dafür ein Distanzgestänge erforderlich, in das die zusätzlichen Hydraulikverbindungsschläuche eingebracht werden.

Selbstverständlich umfasst die Erfindung auch einen Seilkran mit gattungsgemäßen Laufwagen.

Weitere Vorteile bzw. Details ergeben sich aus den Figuren und Figurenbeschreibungen. Dabei zeigt:
- Fig. 1: schematisch einen Seilkran mit erfindungsgemäßem Laufwagen,
- Fig. 2: schematisch einen weiteren erfindungsgemäßen Laufwagen,
- Fig. 3: schematisch ein weiteres Ausführungsbeispiel für einen erfindungsgemäßen Laufwagen,
- Fig. 4 und 5: zwei Varianten zur Verwendung eines erfindungsgemäßen Laufwagens und
- Fig. 6: schematisch die Antriebseinheit für die Hubwinden.

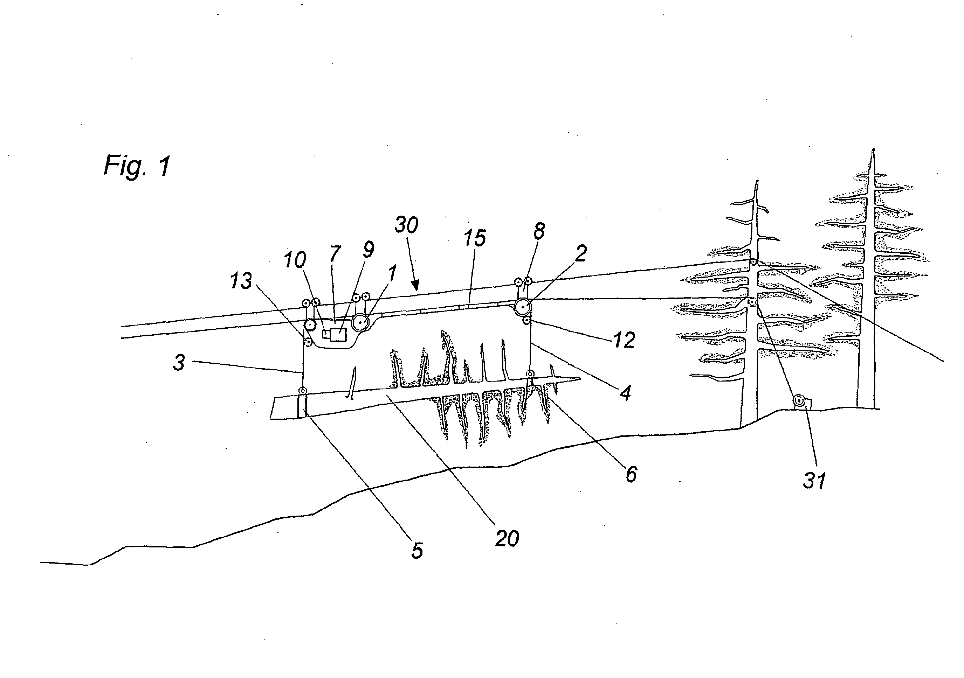

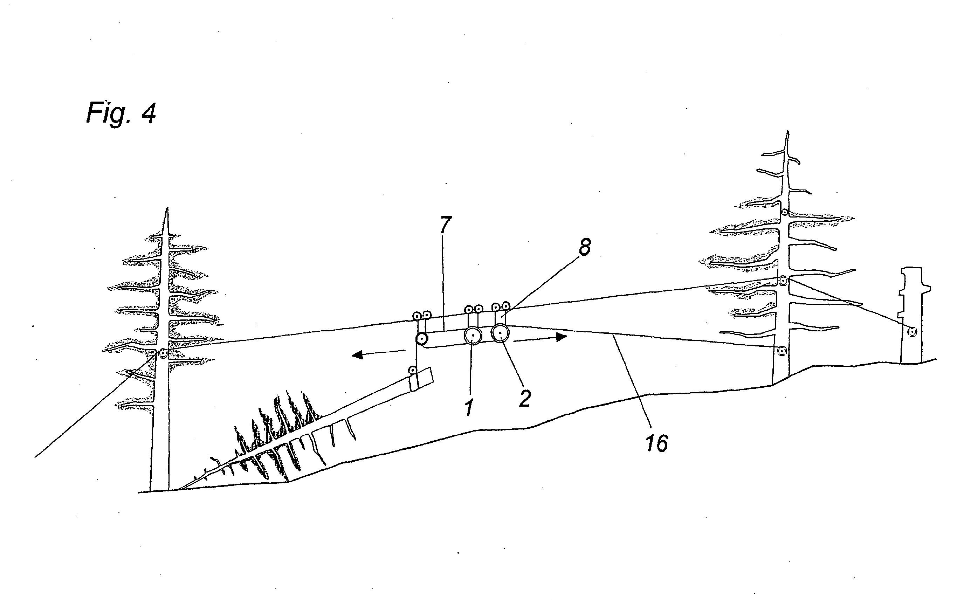

In Fig. 1 wird ein Laufwagen 30 gezeigt, an dem Transportgut 20, beispielsweise ein Baum, an zwei Lastgehängen 5 und 6 angehängt sind. Der Laufwagen besteht aus zwei Laufwerken 7 und 8, wobei auf dem Laufwerk 7 die Antriebseinheit angebracht ist. Diese besteht aus dem Verbrennungsmotor 9, Hydraulikpumpen 10 sowie zwei nicht gezeigte Hydraulikmotoren, die jeweils direkt an den Hubwindentrommein der Hubwinden 1, 2 angeflanscht sind. An jedem Laufwerk 7 bzw. 8 sind Hubseile 3, 4 angebracht, deren Länge im Betrieb verändert wird. Bei Erreichen einer bestimmten Länge des Hubseiles 3, 4 werden die Endabschaltmechanismen 12, 13 aktiviert, durch die die Hubwinden 1 und 2 deaktiviert werden. Der Laufwagen ist an einem Tragseil aufgehängt und wird von einer stationären Winde (z.B. Schlittenwinde), die bergseitig montiert ist, im Gravitationsbetrieb verfahren. Es wäre denkbar, diese Seile zwischen mehreren Bäumen aufzuspannen (wie es auch in Fig. 4 gezeigt ist).

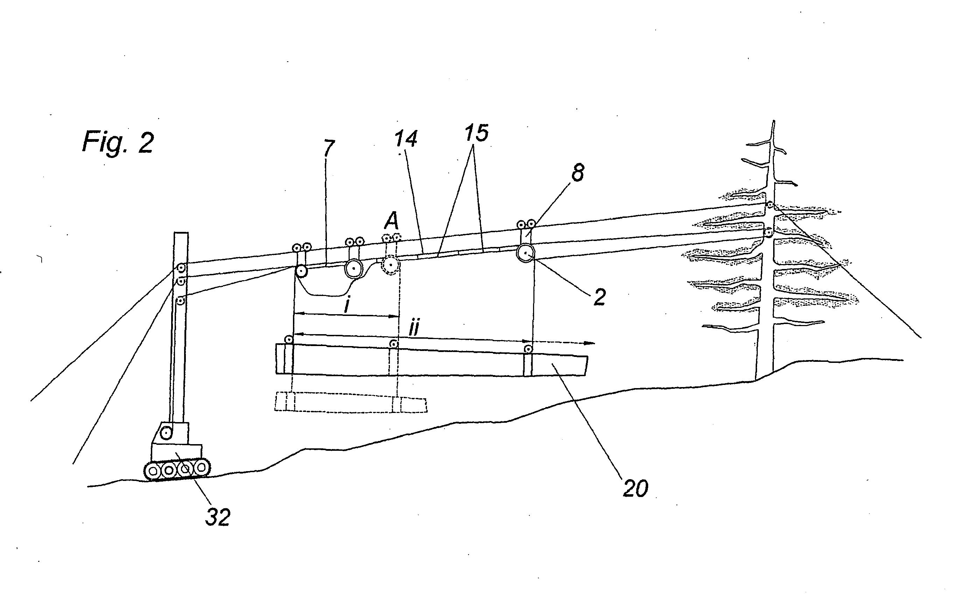

In Fig. 2 ist der Laufwagen von Fig. 1 noch einmal gezeigt, weshalb auf die Bezugszeichen nicht näher eingegangen wird. Die Aufhängung der Seile erfolgt hier mittels eines Kippmastseilgerätes und eines Baumes. Bei einem Kippmastseilgerät handelt es sich um einen verfahrbaren Lastkraftwagen, der einen Masten aufweist, der aufklappbar ist und an dem Seile für den Seilkran befestigbar sind. Das Kippmastseilgerät kann außerdem Antriebseinheiten für den Laufwagen aufweisen, die den All-Terrain-Betrieb mittels Umlaufseilen ermöglichen. Im gezeigten Ausführungsbeispiel sind zwischen den Laufwerken 7 und 8 des Laufwagens mehrere Hydraulikverbindungsschläuche 15 (in Distanzgestängen) eingebracht, sodass die Distanz zwischen den Laufwerken veränderbar ist. In Position A ist der Abstand strichliert angedeutet, an dem das Laufwerk 8 sitzt, wenn keine zusätzlichen Hydraulikverbindungsschläuche 15 eingebracht sind. Damit sind die Abstände zwischen den Laufwerken und damit auch der Hubseile zwischen i und ii regelbar.

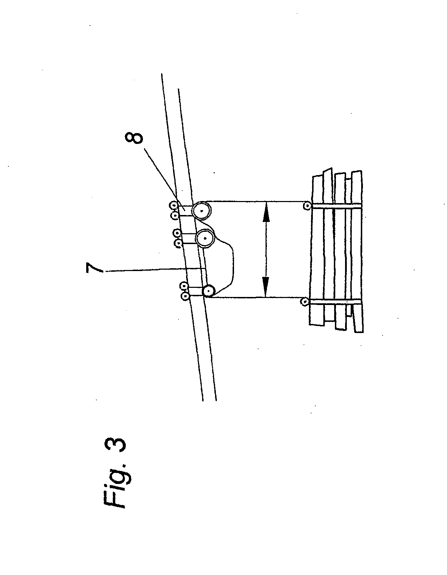

Fig. 3 zeigt den erfindungsgemäßen Laufwagen ohne zusätzlich eingebrachte Hydraulikverbindungsschläuche 15, womit der Mindestabstand in etwa einer Baumstammlänge entspricht - es könnte in diesem Fall ein Abstand von etwa 3,5 Metern gewählt werden. Diese Variante eignet sich besonders für die Seilbringung von Bündeln von Holzsortimenten mit Längen um etwa 4 Metern. Für längere Transportgüter 20 werden einfach Hydraulikverbindungsschläuche 15 und Stangen eingesetzt.

Das Ausführungsbeispiel in Fig. 4 zeigt einen Laufwagen, bei dem das Laufwerk 8 mit zwei Zugstangen direkt am Laufwerk 7 fixiert ist. Bei dieser Variante dient die Hubwinde 2 zum Verfahren des Laufwagens im Gravitationsbetrieb. Das Seil 16 der Hubwinde 2 wird bergseitig verankert. Damit wird der Laufwagen zu einem so genannten Selbstfahrer.

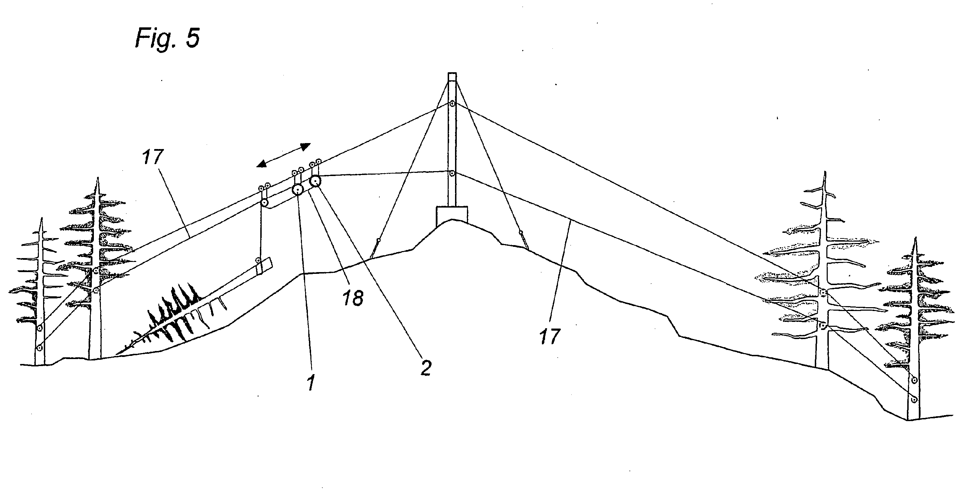

Die in Fig. 5 gezeigte Variante des Laufwagens zeigt eine ähnliche Verwendung des Laufwagens wie in Fig. 4, jedoch wird die Hubseiltrommel am Laufwerk 8 durch eine Parabolscheibe ersetzt. Mit Hilfe eines um die Parabolscheibe gewickelten, an beiden gegenüberliegenden Enden der Seiltrasse verankerten und gespannten Seiles wird der Laufwagen auch als Selbstfahrer im so genannten "All-Terrain-Betrieb" einsetzbar. Die Hubwinde 1 übernimmt alleine die Lastaufnahme.

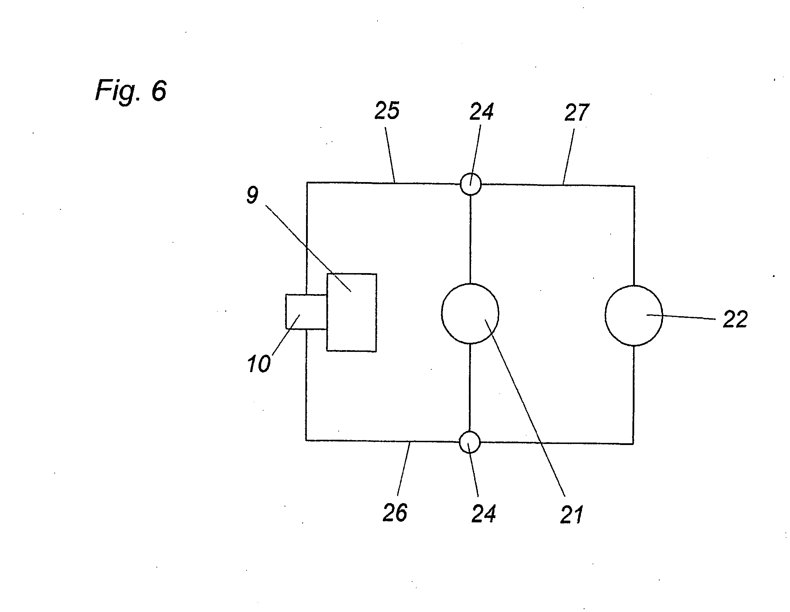

In Fig. 6 ist in stark schematisierter Form die Antriebseinheit für die Hubwinden gezeigt. Dabei verkörpert 9 den Verbrennungsmotor, 10 Hydraulikpumpen, die den Hydraulikkreislauf in Gang halten, 27 die einzelnen Hydraulikleitungen, 21 und 22 sind Hydromotoren, 24 kennzeichnet Durchflussmengenregulierungsventile und 25 den Vorlauf bzw. 26 den Rücklauf der Hydraulikflüssigkeit. Der Verbrennungsmotor 9 treibt die Hydraulikpumpe 10 an, wodurch die Hydraulikflüssigkeit durch die Hydraulikleitungen 27 über den Vorlauf 25 zum Durchflussmengenregulierungsventil 24 (Ventilblöcke) gelangt, wo sich die Hydraulikflüssigkeit zu den Hydromotoren 21 und 22 aufteilt und weiter über das zweite Durchflussmengenregulierungsventil 24 (Ventilblöcke) über den Rücklauf 26 zurück zur Hydraulikpumpe 10 bewegt. Bei entsprechender Dimensionierung der Durchflussmengenregulierungsventile 24 können beide Hydromotoren 21, 22 auch bei unterschiedlicher Last simultan betrieben werden, bzw. so betrieben werden dass eine Laständerung an einem Hydromotor 21 keine Drehzahländerung am zweiten Hydromotor 22 verursacht. An die Hydromotoren 21 und 22 ist noch jeweils direkt eine Hubwinde 1 und 2 angeflanscht. Die Figur ist in stark schematisierter Form dargestellt und skizziert nur die wesentlichen Funktionsmerkmale der erfindungsgemäßen Antriebseinheit.

Die vorliegende Erfindung, insbesondere wie in den Figuren gezeigt, weist zahlreiche Vorteile gegenüber dem Stand der Technik auf. Während die Ausführungsbeispiele gemäß Fig. 4 und 5, die normalerweise zusätzlich erforderlichen Antriebe eines Selbstfahrers überflüssig machen, weisen die Ausführungen, wie in den Fig. 1 bis 3 gezeigt, folgende Vorteile auf:
Es gibt keine Bodenverwundung durch den ziehenden Transport der Bäume, was auch das Unfallrisiko durch abrollende Steine u. dgl. vermindert.
Die Seilkrananlage und die Ankerungen werden geringer belastet aufgrund der Verminderung der Spannungsspitzen und -stöße während der Lastfahrt.
Durch die stabile Aufhängung der transportierten Bäume in Seiltrassenrichtung (Tragseilrichtung) reduziert sich das Risiko des Einfädeins und Hängenbleibens bei der Stützenüberfahrt wie auch am Seiltrassenrand.
Die Bäume können durch die einzelne Steuerung der Ölmotoren kontrollierter am Landeplatz abgelegt werden.
Die ganze Baumbringung ist auch an extremen Lagen möglich und die Verletzungsgefahr für die betreibenden Personen wird verringert.
Es ist durch den freischwebenden Transport und die gleichzeitige Steuerbarkeit aller Hubwinden eine geringere Tragseilhöhe erforderlich, weshalb man weniger hohe Stützen und eine geringere Anzahl an Stützen benötigt.
Die Laufwagengeschwindigkeit bei der Lastfahrt kann erhöht werden.
Durch die ruhigere Lastfahrt ergibt sich ein geringerer Verschleiß an der Seilkrananlage.

## Patentansprüche

1. Laufwagen (30) für Seilkran mit wenigstens zwei Hubwinden (1,2) und einer Antriebseinheit für die Hubwinden, wobei die Antriebseinheit einen verbrennungsmotor (9), einen Hydraulikkreislauf und einen Hydromotor umfassen, **dadurch gekennzeichnet, dass** für jede Hubwinde (1, 2) ein Hydromotor (21, 22) vorgesehen ist.

2. Laufwagen nach Anspruch 1, **dadurch gekennzeichnet, dass** jeder Hydromotor (21, 22) einen eigenen Hydraulikkreislauf aufweist.

3. Laufwagen nach Anspruch 2, **dadurch gekennzeichnet, dass** die Hydraulikkreisläufe einen gemeinsamen Versorgungskreislauf aufweisen.

4. Laufwagen nach Anspruch 3, **dadurch gekennzeichnet, dass** der Versorgungskreislauf und die Hydraulikkreisläufe über Durchflussmengenregulierungsventile (24) in Verbindung stehen.

5. Laufwagen nach einem der Ansprüche 1 bis 4, **dadurch gekennzeichnet, dass** die Hubwinden (1, 2) gleichzeitig betreibbar sind.

6. Laufwagen nach einem der Ansprüche 1 bis 5, **dadurch gekennzeichnet, dass** der Laufwagen (30) und die Hubwinden (1, 2) gleichzeitig betreibbar sind.

7. Laufwagen nach Anspruch 6, **dadurch gekennzeichnet, dass** gleichzeitig sowohl der Laufwagen (30) verfahrbar als auch die Hubwinden betreibbar sind.

8. Laufwagen nach einem der Ansprüche 1 bis 7, **dadurch gekennzeichnet, dass** der Laufwagen (30) einen Antrieb aufweist.

9. Laufwagen nach einem der Ansprüche 1 bis 8, **dadurch gekennzeichnet, dass** der Laufwagen (30) fernsteuerbar ist.

10. Laufwagen nach Anspruch 9, **dadurch gekennzeichnet, dass** die Fernsteuerung eine Funkfernsteuerung ist.

11. Laufwagen nach Anspruch 9 oder Anspruch 10, **dadurch gekennzeichnet, dass** über die Fernsteuerung auch eine Schlittenwinde (31) steuerbar ist.

12. Laufwagen nach Anspruch 9 oder Anspruch 10, **dadurch gekennzeichnet, dass** über die Fernsteuerung auch ein Kippmastseilgerät (32) steuerbar ist.

13. Laufwagen nach einem der Ansprüche 1 bis 12, **dadurch gekennzeichnet, dass** der Laufwagen (30) Lastgehänge (5, 6) aufweist, die distanzveränderbar sind.

14. Seilkrananlage mit Laufwagen nach einem der Ansprüche 1 bis 13.

## Claims

1. Carriage (30) for a cable crane having at least two lifting winches (1, 2) and a drive unit for the lifting winches, wherein the drive unit comprises a combustion engine (9), a hydraulic circuit and a hydraulic motor, **characterized in that** a hydraulic motor (21, 22) is provided for each lifting winch (1, 2).

2. Carriage according to Claim 1, **characterized in that** each hydraulic motor (21, 22) has a separate hydraulic circuit.

3. Carriage according to Claim 2, **characterized in that** the hydraulic circuits have a joint supply circuit.

4. Carriage according to Claim 3, **characterized in that** the supply circuit and the hydraulic circuits are connected via flow rate regulating valves (24).

5. Carriage according to one of Claims 1 to 4, **characterized in that** the lifting winches (1, 2) can be operated at the same time.

6. Carriage according to one of Claims 1 to 5, **characterized in that** the carriage (30) and the lifting winches (1, 2) can be operated at the same time.

7. Carriage according to Claim 6, **characterized in that** both the carriage (30) can be moved and the lifting winches can be operated at the same time.

8. Carriage according to one of Claims 1 to 7, **characterized in that** the carriage (30) has a drive.

9. Carriage according to one of Claims 1 to 8, **characterized in that** the carriage (30) can be remotely controlled.

10. Carriage according to Claim 9, **characterized in that** the remote control is a radio remote control.

11. Carriage according to Claim 9 or Claim 10, **characterized in that** a sled winch (31) can also be controlled via the remote control.

12. Carriage according to Claim 9 or Claim 10, **characterized in that** a yarder (32) can also be controlled via the remote control.

13. Carriage according to one of Claims 1 to 12, **characterized in that** the carriage (30) has a load suspension means (5, 6), the distance between which can be changed.

14. Cable crane installation having a carriage according to one of Claims 1 to 13.

## Revendications

1. Chariot-palan (30) pour câble-grue ayant au moins deux treuils de levage (1, 2) et une unité d'entraînement pour les treuils de levage, l'unité d'entraînement comprenant un moteur à explosion (9), un circuit hydraulique et un moteur hydraulique, **caractérisé en ce qu'**un moteur hydraulique (21, 22) est prévu pour chaque treuil de levage (1, 2).

2. Chariot-palan selon la revendication 1, **caractérisé en ce que** chaque moteur hydraulique (21, 22) présente son propre circuit hydraulique.

3. Chariot-palan selon la revendication 2, **caractérisé en ce que** les circuits hydrauliques présentent un circuit d'alimentation commun.

4. Chariot-palan selon la revendication 3, **caractérisé en ce que** le circuit d'alimentation et les circuits hydrauliques sont reliés par des soupapes régulatrices de débit (24).

5. Chariot-palan selon l'une des revendications 1 à 4, **caractérisé en ce que** les treuils de levage (1, 2) peuvent fonctionner en même temps.

6. Chariot-palan selon l'une des revendications 1 à 5, **caractérisé en ce que** le chariot-palan (30) et les treuils de levage (1, 2) peuvent fonctionner en même temps.

7. Chariot-palan selon la revendication 6, **caractérisé en ce qu'**on peut, en même temps, aussi bien déplacer le chariot-palan (30) que faire fonctionner les treuils de levage.

8. Chariot-palan selon l'une des revendications 1 à 7, **caractérisé en ce que** le chariot-palan (30) présente un dispositif d'entraînement.

9. Chariot-palan selon l'une des revendications 1 à 8, **caractérisé en ce que** le chariot-palan (30) peut être télécommandé.

10. Chariot-palan selon la revendication 9, **caractérisé en ce que** la télécommande est une radiocommande.

11. Chariot-palan selon la revendication 9 ou la revendication 10, **caractérisé en ce qu'**un treuil sur traîneau (31) peut être également télécommandé.

12. Chariot-palan selon la revendication 9 ou la revendication 10, **caractérisé en ce qu'**un câble-mât (32) peut être également télécommandé.

13. Chariot-palan selon l'une des revendications 1 à 12, **caractérisé en ce que** le chariot-palan (30) présente des élingues (5, 6) à écartement modulable.

14. Système de câble-grue avec chariot-palan selon l'une des revendications 1 à 13.
